# EUROPÄISCHE PATENTANMELDUNG

(11) **EP 1 543 901 A1**
(43) Veröffentlichungstag der Anmeldung: **22.06.2005**
(21) Anmeldenummer: 04029275.7
(22) Anmeldetag: 10.12.2004
(51) Int. Cl.: B22D 19/14, B62D 29/00, C22C 47/08

(54) **Karosserie oder Karosserieteil für ein Fahrzeug**

(30) Priorität: 19.12.2003 DE 10359784
(71) Anmelder: DaimlerChrysler AG, 70567 Stuttgart (DE)
(72) Erfinder: Behr, Thomas, Dr., 89275 Elchingen (DE); Eipper, Konrad, 72108 Rottenburg (DE); Fussnegger, Wolgang, 72074 Tübingen (DE); Gerick, Arndt, 89079 Ulm (DE); Minnich, Daniel, 89081 Ulm (DE); Scheffzuek, Matthias, 72070 Tübingen (DE)

(57) **Zusammenfassung**

Die Erfindung bezieht sich auf ein Karosserieteil 1 für ein Fahrzeug, das zumindest teilweise aus Stahl-Gussteilen oder Leichtmetallgussteilen 2 gebildet ist, wobei mindestens ein Metallteil oder Metallwerkstoffe 3 derart in das Innere der Karosserie oder des Karosserieteils 1 eingebracht werden, dass das Karosserieteil 1 nach Abschluss des Gießvorgangs eine geschlossene Oberflächenstruktur aufweist, wobei die Stahl-Gussteile oder Leichtmetallgussteile 2 in das Gusswerkzeug als Verstärkungselemente eingegeben werden, die nach Abschluss des Gießverfahrens eine feste Verbindung mit der erstarrten Schmelze eingehen.

## Beschreibung

Die Erfindung betrifft eine Karosserie oder ein Karosserieteil für ein Fahrzeug, das zumindest teilweise aus Stahl-Gussteilen oder Leichtmetallgussteilen gebildet ist, wobei mindestens ein Metallteil oder Metallwerkstoffe derart in das Innere der Karosserie oder des Karosserieteils eingebracht werden, dass eine in etwa geschlossene Oberflächenstruktur gebildet wird.

Es ist bereits ein Verfahren zur Herstellung von Metall- oder Metallschaum-Verbundbauteilen bekannt (DE 101 27 716), wobei das flächige oder geformte Metallteil in den Hohlraum einer Gussform eingebracht wird. Das Metallteil begrenzt zumindest teilweise den Hohlraum. Bei diesem Herstellungsverfahren wird ein Gemisch aus Metallschmelze und Treibmittel in den Hohlraum eingegeben und dort ausgeschäumt. In den Fällen, in denen der ausgeschäumte Formhohlraum nur teilweise von den eingelegten Metallteilen begrenzt ist, lassen sich beispielsweise U- oder L-Profile ausschäumen.

Ferner ist ein Trägerelement für eine Fahrzeugkarosserie bekannt (WO 03/031252), wobei das Trägerelement aus gegossenem Eisen besteht. Das Trägerelement umfasst ein gegossenes Schalenelement, dessen Außenkontur einen Hohlraum bildet. In den Hohlraum werden erst nach Fertigstellung der Trägerelemente Hohlkugeln oder ein Metallschaum auf Eisenbasis eingefüllt. Hierdurch wird nicht die gewünschte Festigkeit erreicht, da die Hohlkugeln oder der Metallschaum keine feste Verbindung mit dem Trägerelement eingehen.

Der Erfindung liegt die Aufgabe zugrunde, eine dünnwandige Karosserie oder Karosserieteile für ein Fahrzeug derart auszubilden, dass sie den Festigkeits- und Crashanforderungen entsprechen.

Gelöst wird die Aufgabe erfindungsgemäß dadurch, dass die Stahl-Gussteile oder Leichtmetallgussteile Metallteile oder Metallwerkstoffe aufweisen, die vor dem Gießvorgang in die Werkzeuge eingelegt und von der Schmelze umgeben werden und so als Verstärkungselemente fungieren, wobei sie eine feste Verbindung mit der erstarrten Schmelze des Karosserieteils eingehen.

Da die Metallteile oder Metallwerkstoffe, im Folgenden auch als Verstärkungsteile bezeichnet, bereits vor oder beim Gießvorgang in die Werkzeuge eingebracht werden, können sie eine sehr feste, dauerhafte Verbindung mit der Karosseriestruktur eingehen. Die Verbindung kann sowohl durch Stoff- als auch durch Formschluss erfolgen. Neben der Erhöhung der Festigkeit des Karosseriebauteils wird durch die Verstärkungsteile auch die Deformationsenergie deutlich erhöht. Das ist insbesondere hinsichtlich der Crashanforderungen von Bedeutung.
Durch die erfindungsgemäßen Verstärkungsteile sind auch dünnwandige Karosserieteile in crashexponierten Bereichen herstellbar.

In einer ersten erfindungsgemäßen Variante ist vorgesehen, dass die Metallteile oder Metallwerkstoffe als Stahlseile oder gelochte Metallteile und/oder als Streckmetall ausgebildet sind. Diese Metallteile tragen dazu bei, die Festigkeit bzw. die Bruchenergien des Karosseriebauteils zu erhöhen, ohne dass das Gesamtgewicht der Karosserie wesentlich erhöht wird.

Eine weitere Variante, gemäß einer erfindngsgemäßen Weiterbildung, sieht gelochte Metallteile, Metallgitter, Metallgewebe oder Faserwerkstoffe vor.

Zweckmäßigerweise werden die als Verstärkungselemente ausgebildeten Metallteile oder Verstärkungsteile in die Gießwerkzeuge eingelegt und fixiert bevor der Abguss erfolgt und sie von der Metallschmelze umgeben werden.

In einer weiteren Variante werden als Metallteile Stahlhohlkugeln vorgesehen. Dabei steht insbesondere der Aspekt der Gewichtseinsparung bei hoher Deformations-Energieabsorption im Vordergrund. Bevorzut werden entsprechende Karosserieteile im Frintbereich und im Türbereich von Kraftfahrzeugen eingesetzt.
Vorteilhaft ist es hierzu, dass die Stahlhohlkugeln zu Formkörpern zusammengefasst sind, beziehungsweise Formteile in der Form von Leichtbauteilen bilden.

Gemäß einer weiteren erfindungsgemäßen Ausführungsform ist schließlich vorgesehen, dass die Verstärkungsteile oder Leichtbauteile von einem das Karosseriebauteil bildenden Metallschaum umgeben werden.

Von besonderer Bedeutung ist für die vorliegende Erfindung, dass das Guss-Verfahren zur Herstellung einer Karosserie oder eines Karosserieteils aus folgenden Verfahrensschritten besteht:

Die Metallteile werden in das Werkzeug derart eingelegt, dass sie von der hinzuzugebenden Metallschmelze vollständig umgeben werden. Zumindest die als Leichtbauteile ausgebildeten Metallteile werden ummantelt oder von einer Metallfolie umgeben. Hierdurch wird das Eindringen der Metallschmelze in das Leichtbauteil reduziert.
Die Metallteile werden in den Werkzeugen fixiert, bevor die Metallschmelze anschließend in die Gussform eingegossen wird.

Weitere Vorteile und Einzelheiten der Erfindung sind in den Patentansprüchen und in der Beschreibung erläutert und in den Figuren dargestellt.

Dabei zeigen:
- Fig. 1: ein erstes Ausführungsbeispiel eines Karosserieteils mit Gusskörper, in dessen Innenraum Stahlhohlkugeln als Formteil eingebracht sind,
- Fig. 2: ein zweites Ausführungsbeispiel eines Karosserieteils mit in den Innenraum eingelassenen Stahlseilen,
- Fig. 3: ein drittes Ausführungsbeispiel eines Karosserieteils ähnlich wie in Fig. 2,
- Fig. 4: ein viertes Ausführungsbeispiel eines Karosserieteils mit einem eingelassenen Drahtgitter,
- Fig. 5: ein fünftes Ausführungsbeispiel eines Karosserieteils mit einem eingelassenen Streckmetall.

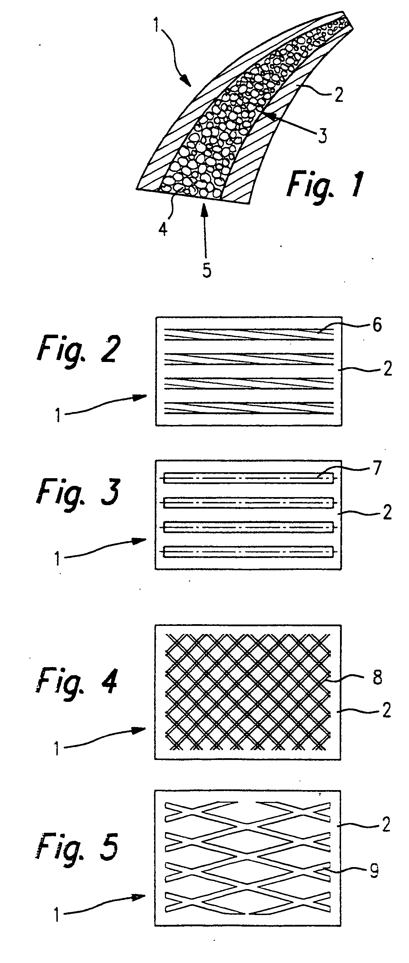

In der Zeichnung ist mit 2 ein Gussteil bzw. Gusskörper bezeichnet, der aus Stahl oder Aluminium gebildet sein kann. In einen Innenraum 5 des Gussteils 2 sind gemäß den Ausführungsbeispielen Fig. 1 Stahlhohlkugeln 4, gemäß Fig. 2 Stahlseile 6, gemäß Fig. 3 geriffelte Stahlseile 7, gemäß Fig. 4 Drahtgitter 8 und gemäß Fig. 5 ein Streckmetall oder Metallgewebe 9 eingelegt.

Das Gussteil 2 ist Teil einer in der Zeichnung nur teilweise angedeuteten Karosserie oder eines Karosserieteils 1. Die Karosserie oder das Karosserieteil 1 kann in einem Gießverfahren oder auch Druckguss-Verfahren nach folgenden Verfahrensschritten hergestellt werden:

Zuerst werden die Metallteile in das Werkzeug eingelegt, dann das Werkzeug geschlossen und anschließend die Metallschmelze als Druck- oder Kokillenguss in die Form eingebracht, so dass sie im erstarrten Zustand vollständig umgeben werden und somit eine feste Verbindung mit den Wandteilen der Karosserie 1 eingehen. Damit die Metallteile 3 in der Schmelze die gewünschte Position beibehalten, werden sie vor dem Schmelzvorgang fixiert und erst danach die Schmelze in die Gussform eingegeben.

In einer weiteren Variante werden die als Leichtbauteile ausgebildeten Metall- oder Werkstoffteile 3, insbesondere Stahlhohlkugeln 4, mit einer löslichen bzw. schmelzbaren Umhüllung umgeben, damit sie tauchbadtauglich werden und sich nicht voll saugen, oder gegebenenfalls aufschwimmen. Die Umhüllung kann beispielsweise durch eine Metallfolie, insbesondere Aluminiumfolie gebildet werden.

Dieses Verfahren kann bei Stahlguss, insbesondere wenn dieser nicht aus einer hochwertigen Legierung besteht, oder bei Aluminium-Druckgussverfahren eingesetzt werden. Somit können auch sehr dünnwandige Karosserieteile hergestellt werden, die den hohen Crashanforderungen genügen. Dies wird auch dadurch erreicht, dass die Außenwand des Karosserieteils mit den eingelegten Metallteilen eine feste Verbindung eingeht, da diese vom Gussmaterial vollständig umgeben werden bzw. das Gussmaterial in die Öffnungen des Drahtgitters oder Streckmaterials eindringen kann und mit den Stahlhohlkugeln 4 oder den Stahlseilen 6, 7 eine feste mechanische Verbindung eingeht. Die Schmelze kann die Oberfläche der Stahlseile 6, 7 anschmelzen.

## Patentansprüche

1. Karosserie oder Karosserieteil (1) für ein Fahrzeug, das zumindest teilweise aus Stahl-Gussteilen oder Leichtmetallgussteilen (2) gebildet ist, wobei mindestens ein Metallteil oder Metallwerkstoffe (3) derart in das Innere der Karosserie oder des Karosserieteils (1) eingebracht werden, dass eine in etwa geschlossene Oberflächenstruktur gebildet wird,
**dadurch gekennzeichnet,**
**dass** die Stahl-Gussteile oder Leichtmetallgussteile (2) Metallteile oder Metallwerkstoffe (3) beinhalten, die vor dem Gießvorgang in die Werkzeuge eingelegt und von der Schmelze umgeben werden und so als Verstärkungsteile fungieren, wobei sie eine feste Verbindung mit der erstarrten Schmelze des Karosserieteils aufweisen.

2. Karosserie nach Anspruch 1,
**dadurch gekennzeichnet,**
**dass** die Metallteile oder Metallwerkstoffe (3) als Stahlseile (6, 7) oder gelochte Metallteile (8) und/oder als Streckmetall (9) ausgebildet sind.

3. Karosserie nach Anspruch 1,
**dadurch gekennzeichnet,**
**dass** die gelochten Metallteile als Metallgewebe oder Faserwerkstoffe ausgebildet sind.

4. Karosserie nach Anspruch 1,
**dadurch gekennzeichnet,**
**dass** die als Verstärkungselemente ausgebildeten Metallteile (3) in die Werkzeuge eingelegt, fixiert und dann von der Metallschmelze umgeben werden.

5. Karosserie nach Anspruch 1
**dadurch gekennzeichnet,**
**dass** die als Stahlhohlkugeln ausgebildeten Leichtbauteile als Formkörper gebunden sind und/oder Formteile bilden.

6. Karosserie nach Anspruch 1
**dadurch gekennzeichnet,**
**dass** die Stahl-Gussteile oder Leichtmetallgussteile zumindest zum Teil aus Metallschaum ausgebildet sind.

7. Druckguss-Verfahren zur Herstellung einer Karosserie oder eines Karosserieteils nach Anspruch 1
**gekennzeichnet durch** folgende Verfahrensschritte:
die Metallteile (3) werden in das Werkzeug derart eingelegt, dass sie von der Metallschmelze vollständig umgeben werden,
zumindest die als Leichtbauteile ausgebildeten Metallteile (3) werden ummantelt oder von einer Folie umgeben,
die Metallteile (3) werden in den Werkzeugen fixiert,
die Metallschmelze wird anschließend in die Gussform eingegeben.
